# EUROPÄISCHE PATENTSCHRIFT

(11) **EP 4 303 108 B1**
(45) Veröffentlichungstag und Bekanntmachung des Hinweises auf die Patenterteilung: **17.06.2026**
(21) Anmeldenummer: 23180972.4
(22) Anmeldetag: 22.06.2023
(51) Int. Cl.: B62J 11/19, B62J 43/20, B62K 19/32, B62J 45/00, B62K 3/04, B62K 19/40, B62K 21/06, B62J 43/13, B62J 43/30, B62M 6/90

(54) **FAHRRADELEMENT UND FAHRRADSYSTEM**
BICYCLE ELEMENT AND BICYCLE SYSTEM
ÉLÉMENT DE BICYCLETTE ET SYSTÈME DE BICYCLETTE

(30) Priorität: 05.07.2022 DE 202022103756 U
(43) Veröffentlichungstag der Anmeldung: 10.01.2024
(73) Patentinhaber: Canyon Bicycles GmbH, 56073 Koblenz (DE)
(72) Erfinder: Häußler, Martin Tony, 56068 Koblenz (DE); Opitz, Eric, 95163 Weißenstadt (DE); Schmidt, Patrick, 56068 Koblenz (DE); Klein, Philipp, 56073 Koblenz (DE); Langlitz, Bastian, 56068 Koblenz (DE); Helfenberger, Philip, 56068 Koblenz (DE); Birkenfeld, René, 79114 Freiburg (DE)
(74) Vertreter: dompatent

(56) Entgegenhaltungen:
- CN-U- 207 843 157
- DE-A1- 102010 026 504
- DE-A1- 102015 105 659
- US-A1- 2019 386 444
- US-A1- 2021 147 032
- US-B1- 9 615 472

## Beschreibung

Die Erfindung betrifft ein Fahrradelement und ein Fahrradsystem.

Ein Fahrradrahmenelement mit den Merkmalen des Oberbegriffs des Anspruchs 1 ist in US 9,615,472 beschrieben.

Ein Fahrradelement ist beispielsweise ein gesamtes Fahrrad oder nur ein Teil des Fahrrades, beispielsweise ein Fahrradrahmen in Verbindung mit einer Fahrradgabel, ein Fahrradrahmen in Verbindung mit einem Lenker und dergleichen. Insbesondere bei E-Bikes, Pedelecs und dergleichen besteht die Möglichkeit auch elektrisches Licht mit der im Akku gespeicherten Energie zu versorgen. Das Ein- und Ausschalten des Lichtes kann ggf. unmittelbar über einen Schalter am Lenker oder die Remote-Einheit erfolgen. Eine große Anzahl an Fahrrädern, die einen Elektromotor aufweisen, wird ohne Beleuchtung ausgeliefert. Wenn ein Kunde eine Beleuchtung an einem derartigen Fahrrad montieren möchte und die Beleuchtung keine gesonderte Batterie enthalten soll, sondern direkt mit der Batterie des Fahrrads verbunden werden soll, ist es erforderlich ein entsprechendes Anschlusskabel zu verlegen. Entsprechende Anschlussmöglichkeiten befinden sich hierbei üblicherweise in dem Bereich des Batterieanschlusses, d.h. in dem Bereich, in dem der elektrische Kontakt zur Batterie besteht. Entsprechende Anschlussmöglichkeiten können auch am Motor vorgesehen sein. Es ist sodann erforderlich ein Kabel, ausgehend von dem Batterieanschluss zu der Beleuchtungseinrichtung zu verlegen. Dies ist grundsätzlich zwar innerhalb des Rahmens möglich, jedoch relativ schwierig und aufwendig.

Ferner sind E-Bikes bekannt, bei denen im Bereich des Lenkervorbaus eine magnetische Halteeinrichtung vorgesehen ist. Die Halteeinrichtung dient zum magnetischen Halten einer Beleuchtungseinrichtung, wobei die magnetische Halteeinrichtung zusätzlich über elektrische Kontakte verfügt. Diese sind über ein im Rahmen verlegtes Kabel mit dem Batterieanschluss verbunden. Hierbei handelt es sich allerdings um eine sehr spezielle Lösung, die stets die Verwendung eines entsprechenden geeigneten Beleuchtungsmittels mit entsprechendem magnetischen Verbindungselement voraussetzt. Der Kunde hat insofern keine Wahlmöglichkeit, welche Beleuchtungseinrichtung er für geeignet hält.

Aufgabe der Erfindung ist es ein Fahrradelement und ein Fahrradsystem zu schaffen, wodurch die Möglichkeit einer einfachen und individuellen Verbindung eines elektrischen Bauteils, wie einer Beleuchtungseinrichtung, geschaffen ist.

Die Lösung der Aufgabe erfolgt erfindungsgemäß durch ein Fahrradelement mit den Merkmalen des Anspruchs 1, sowie ein Fahrradsystem mit den Merkmalen des Anspruchs 6 oder 7.

Das erfindungsgemäße Fahrradelement weist ein Fahrradrahmenelement und ein mit dem Fahrradrahmelement verbundenes Fahrradbauteil auf. Beispielsweise handelt es sich bei dem Fahrradrahmenelement um einen Fahrradrahmen oder Teil eines Fahrradrahmens, wie ein Oberrohr, ein Unterrohr und/oder ein Gabelrohr. Bei dem Fahrradbauteil handelt es sich um ein mit dem Fahrradrahmenelement verbundenes Bauteil wie einen Vorbau, einen Lenker, eine Sattelstange, eine Schwinge, einen Gepäckträger oder dergleichen. Bei dem Fahrradbauteil kann es sich auch um ein Befestigungselement für andere Bauteile, wie einen Steuersatz, eine Klemme für das Sattelrohr oder dergleichen handeln.

Ferner weist das erfindungsgemäße Fahrradelement einen, vorzugsweise am Fahrradrahmenelement vorgesehenen, Batterieanschluss auf. Ein derartiger Batterieanschluss kann beispielsweise innerhalb des Fahrradrahmens, z. B. innerhalb eines Oberrohrs, eines Gabelrohrs und/oder eines Unterrohrs angeordnet sein. Möglich ist es insbesondere, dass der Batterieanschluss mittels einer Stromleitung mit einem, vorzugsweise mit dem Fahrradrahmenelement unmittelbar oder mittelbar verbundenen Elektromotor verbunden ist. Erfindungsgemäß ist mit dem Batterieanschluss ein Kabel unmittelbar oder mittelbar verbunden. Möglich ist es vorzugsweise, dass das Kabel mit der Stromleitung verbunden ist. In bevorzugter Ausführung kann zwischen Stromleitung und Kabel eine, vorzugsweise eine Anschlussklemme aufweisende, Anschlussvorrichtung angeordnet sein. Es ist bevorzugt, dass die Anschlussvorrichtung an dem Elektromotor angeordnet ist. Vorzugsweise kann das Kabel mit der Anschlussvorrichtung lösbar, insbesondere koppelbar, oder unlösbar verbunden sein. Das Kabel ist im Fahrradrahmenelement, sowie auch im oder am Fahrradbauteil angeordnet. Beispielsweise ist das Kabel, ausgehend von einem im Unterrohr vorgesehenen Batterieanschluss innerhalb des Unterrohrs verlegt und sodann durch das Gabelrohr in einen Lenkervorbau oder dergleichen geführt. Ferner ist ein Halteelement vorgesehen. Das Halteelement ist mit dem Fahrradbauteil verbunden. Erfindungsgemäß weist das Halteelement eine Durchgangsöffnung auf, in der ein elastisch verformbares Klemmelement angeordnet ist, das mit dem Steckerelement zusammenwirkt und/oder das Steckerelement ist. Ferner kann es sich bei dem Halteelement auch um das Fahrradbauteil selbst handeln.

Das Halteelement dient zur Aufnahme eines mit dem Kabel verbundenen Steckerelements, wobei das Halteelement das Steckerelement fixiert. Das Steckerelement ist mit dem freien Ende des Kabels verbunden, sodass ein Ende des Kabels unmittelbar oder mittelbar mit dem Batterieanschlusses und das andere Ende des Kabels mit dem Steckerelement verbunden ist. In bevorzugter Ausführungsform handelt es sich bei dem Steckerelement um ein genormtes Steckerelement. Dieses erfindungsgemäße Steckerelement ist am Halteelement angeordnet und für einen Benutzer auf einfache Weise zugänglich. An dem Steckerelement kann ein Benutzer somit ein elektrisches Bauteil anschließen. Hierbei handelt es sich beispielsweise um eine Beleuchtungseinrichtung. Der Benutzer hat somit den Vorteil, dass er nach seinen Bedürfnissen und Wünschen ein Beleuchtungselement auswählen kann und dieses über einen einfachen Steckkontakt an die Batterie des E-Bikes anschließen kann. Ein aufwendiges Verlegen und Anschließen eines Kabels ist nicht erforderlich. Auch kann an ein derartiges Steckerelement ein anderes elektronisches Bauteil, wie beispielsweise ein Mobiltelefon zum Laden angeschlossen werden. Es ist beispielsweise möglich, das entsprechende Steckerelement mit einer Beleuchtungseinrichtung zu verbinden, oder wahlweise, insbesondere wenn eine Beleuchtung nicht erforderlich ist, über das Steckerelement ein Mobiltelefon zu laden.

Ein entsprechendes Steckerelement kann in einen Bereich eines Lenkervorbaus, eines Steuersatzes oder am Lenker direkt angeordnet sein. Ebenso kann ein entsprechendes Steckerelement beispielsweise an einem Sattelrohr oder im Bereich eines Sattelrohrs angeordnet sein, um beispielsweise ein Rücklicht mit diesem zu verbinden. Ebenso ist es zweckmäßig ein derartiges Steckerelement beispielsweise an einem Gepäckträger oder im Bereich des Gepäckträgers beispielsweise an einer Sattelstrebe anzuordnen.

Vorzugsweise ist das Halteelement derart ausgebildet, dass das Steckerelement formschlüssig und/oder kraftschlüssig fixiert ist. Das Halteelement ist derart ausgebildet, dass das Steckerelement klemmend fixiert ist. Das Halteelement und/oder das Steckerelement weist eine Einstecköffnung auf, durch die das Steckerelement zugänglich ist. Durch die Einstecköffnung kann somit ein Stecker einer Beleuchtungseinrichtung oder dergleichen mit dem Kabel verbunden werden. Vorzugsweise ist die Einstecköffnung mit einem Deckel verschlossen, sodass das Eindringen von Feuchtigkeit vermieden ist, wenn das Steckerelement nicht mit einem Stecker verbunden ist.

Das Halteelement ist in einem Steuersatz eines Lenkkopflagers integriert. Insbesondere erfolgt die Integration des Halteelements in ein ringförmiges Bauteil des Steuersatzes, das einen Gabelschaft einer Fahrradgabel umgibt. Die Integration des Halteelements in dieses Bauteil des Fahrrades weist den Vorteil auf, dass eine einfache Gabelführung möglich ist und das Steckerelement gut zugänglich ist. Hierdurch kann der Benutzer auf einfache Weise mit dem Steckerelement unterschiedliche elektronische Bauteile verbinden.

Besonders bevorzugt ist es hierbei, dass das klemmende Fixieren des Steckerelements in einem Teil des Steuersatzes derart erfolgt, dass beim Fixieren des Steuersatzes gleichzeitig das Fixieren des Steckerelements erfolgt. Dies hat den Vorteil, dass keine zusätzliche weitere klemmende Fixierung oder dergleichen erforderlich ist.

Beispielsweise kann ein ringförmiges Bauteil eines Steuersatzes eine Öffnung aufweisen, in der ein elastisches Element angeordnet ist. Dieses elastische Element wirkt mit dem Steckerelement zusammen. Durch Fixieren des Steuersatzes wird das elastische Element komprimiert und fixiert somit klemmend das Steckerelement. Beispielsweise kann das elastische Element eine Ausnehmung oder Öffnung aufweisen, wie das Steckerelement angeordnet ist.

Alternativ ist es beispielsweise auch möglich, dass das Steckerelement durch eine Rastverbindung mit dem Halteelement verbunden ist.

Vorzugsweise ist das Kabel zumindest in dem Fahrradrahmenelement insbesondere in dem Unterrohr in einem Kabelkanal angeordnet. Hierdurch ist eine definierte Lage des Kabels sichergestellt und ferner gewährleistet, dass beispielsweise beim Ein- und Aussetzen der Batterie das Kabel nicht beschädigt wird. Vorzugsweise erstreckt sich der Kabelkanal im Wesentlichen vom Batterieanschluss bis zu einem Gabelrohr, sodass das Kabel sodann aus dem Kabelkanal heraus in das Gabelrohr zu dem Halteelement, insbesondere einem ringförmigen Element eines Steuersatzes geführt werden kann.

Die Erfindung betrifft ferner ein Fahrradsystem mit mindestens einem erfindungsgemäßen Fahrradelement. Bei dem Fahrradsystem handelt es sich insbesondere um ein Fahrrad. Vorzugsweise weist das Fahrradsystem mindestens zwei erfindungsgemäße Fahrradelemente auf. Bei Ausführung des Fahrradsystems mit mehreren erfindungsgemäßen Fahrradelementen ist es bevorzugt, dass die Batterieanschlüssen der mehreren Fahrradelemente durch einen einzigen gemeinsamen Batterieanschluss ausgebildet sind. Somit ist es bevorzugt umgesetzt, dass die mehreren Kabel der mehreren Fahrradelemente mit einem einzigen Batterieanschluss verbunden sind.

Nachfolgend wird die Erfindung anhand einer bevorzugten Ausführungsform unter Bezugnahme auf die anliegenden Zeichnungen näher erläutert.

Es zeigen:
- Figur 1: eine schematische Schnittansicht des Fahrradrahmenelements,
- Figur 2: eine schematische Ansicht des Kabels mit Steckerelement und
- Figur 3: eine schematische Draufsicht eines Fahrradbauteils in Form eines Zentrierrings eines Steuersatzes.

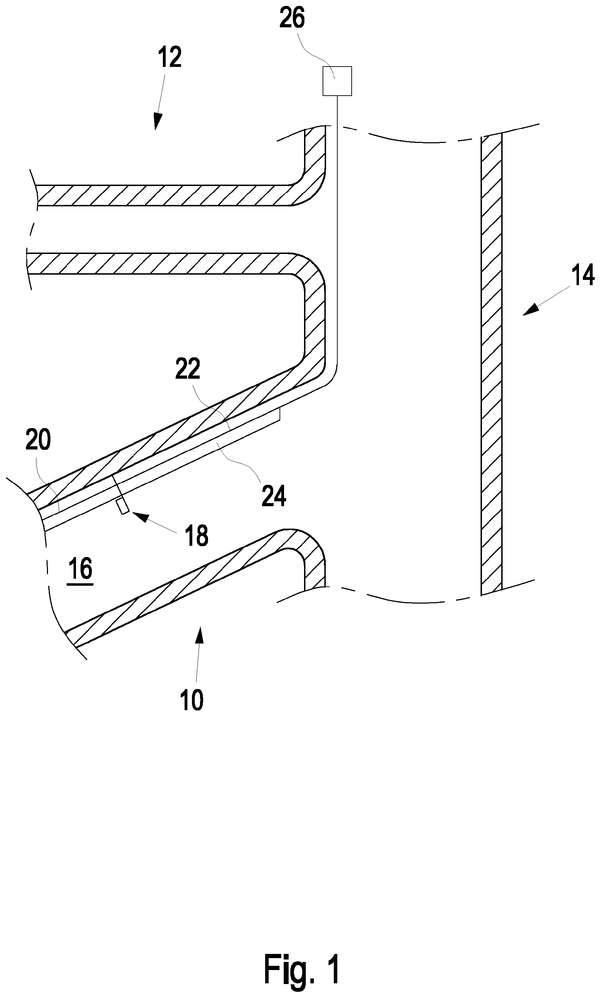

Figur 1 zeigt schematisch ein Fahrradrahmenelement, wobei ein Teil eines Fahrradrahmens dargestellt ist, der ein Unterrohr 10 und ein Oberrohr 12 aufweist, das über ein Gabelrohr 14 miteinander verbunden ist. In einem Innenraum 16 des Unterrohrs 10 ist die nicht dargestellte Batterie angeordnet. Diese ist beispielsweise durch eine im Bereich des Tretlagers vorgesehene Öffnung von unten in das Unterrohr eingeschoben. Ferner ist innerhalb des Unterrohrs 10 ein Batterieanschluss 18 vorgesehen. Bei eingesetzter Batterie erfolgt über den Batterieanschluss 18 die elektrische Verbindung. Mit dem Batterieanschluss 18 ist im dargestellten Ausführungsbeispiel ein Kabel 20 verbunden, das mit dem Elektromotor verbunden ist. Weitere nicht dargestellte Kabel sind beispielsweise mit einem am Lenker vorgesehen Steuerelement und dergleichen verbunden. Erfindungswesentlich ist es, dass mit dem Batterieanschluss 18 unmittelbar oder mittelbar zusätzlich ein Kabel 22 verbunden ist. Dieses ist im dargestellten Ausführungsbeispiel innerhalb eines Kabelkanals 24 angeordnet und ausgehend vom Batterieanschluss 18 in Richtung des Gabelrohrs 14 geführt. Innerhalb des Gabelrohrs 14 ist das Kabel 22 nach oben in Richtung eines Steuersatzes oder eines Halterings oder dergleichen geführt, wobei das nicht mit dem Batterieanschluss verbundenen Ende des Kabels 22 mit einem Steckerelement 26 verbunden ist. Alternativ zur der Ausführung gemäß Fig. 1 kann bspw. das Kabel 22 mit einem Elektromotor, insbesondere mit einer Anschlussklemme des Elektromotors, verbunden sein, wobei wiederum der Elektromotor über das Kabel 20 mit dem Batterieanschluss 18 verbunden ist. In dieser alternativen Ausführung ergibt sich somit eine mittelbare elektrische Verbindung zwischen dem Steckerelement 26 und dem Batterieanschluss 18 über das einerseits mit dem Steckerelement 26 und andererseits mit dem Elektromotor verbundene Kabel 22 sowie über das einerseits mit dem Elektromotor und andererseits mit dem Batterieanschluss 18 verbundene Kabel 20.

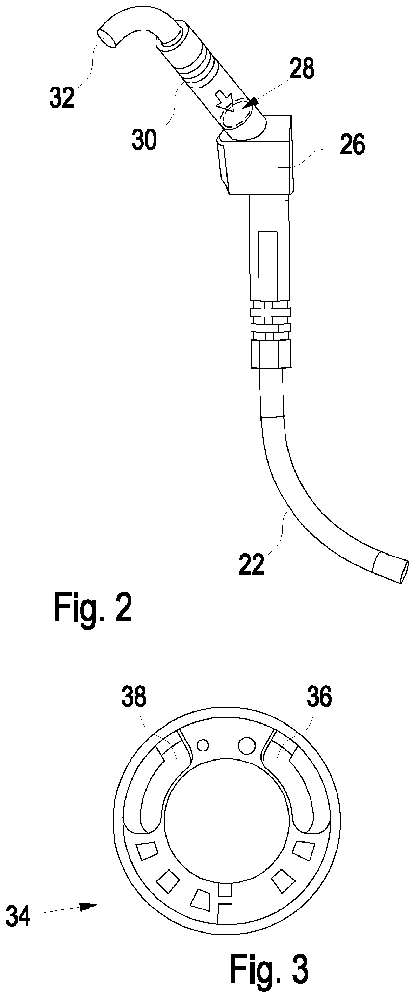

Wie insbesondere aus Figur 2 ersichtlich, ist das Kabel 22 an dem freien Ende mit einem Steckerelement 26 verbunden. Das Steckerelement 26 weist eine Einstecköffnung 28 auf. Diese kann mit einem Deckel verschlossen sein. Die Einstecköffnung 28 dient zum Einstecken eines Steckers 30, der sodann über ein Kabel 32 beispielsweise mit einer Beleuchtungseinrichtung verbunden sein kann.

In besonders bevorzugter Ausführungsform ist das Steckerelement 26 in einen Zentrierring oder in einem anderen Bauteil eines Steuersatzes angeordnet. Ein derartiger Zentrierring 34 (Figur 3) weist beispielsweise mehrere Durchgangsöffnungen 36, 38 auf. Die Durchgangsöffnungen 36, 38 dienen zum Hindurchführen von Kabeln, Bowdenzügen, Hydraulikleitungen und dergleichen. Innerhalb einer der Öffnungen 36, 38 oder einer gesonderten Öffnung ist in besonders bevorzugter Ausführungsform das Steckerelement 26 angeordnet. Das Steckerelement 26 ist selbst elastisch ausgebildet oder wirkt mit einem elastischen Bauteil zusammen. Dieses kann zum Fixieren des Steckerelements in dem insbesondere als Zentrierring ausgebildeten Halteelement 34 komprimiert werden. Das Komprimieren kann durch ein gesondertes Element erfolgen, wobei es bevorzugt ist, dass das Komprimieren durch das Fixieren des Steuersatzes erfolgt.

## Patentansprüche

1. Fahrradelement mit
einem Fahrradrahmenelement (10, 12, 14),
einem mit dem Fahrradrahmelement (10, 12, 14) verbundenen Fahrradbauteil (34),
einem, vorzugsweise am Fahrradrahmenelement (10, 12, 14) vorgesehenen, Batterieanschluss (18),
einem mit dem Batterieanschluss (18) verbundenen Kabel (22), wobei das Kabel (22) im Fahrradrahmenelement (10, 12, 14) und im Fahrradbauteil (34) angeordnet ist und
einem mit dem Fahrradbauteil verbundenen und/oder als Fahrradbauteil ausgebildeten Halteelement (34), das ein mit dem Kabel (22) verbundenes Steckerelement (26) fixiert,
wobei das Halteelement (34) und/oder das Steckerelement (26) eine Einstecköffnung (28) aufweist, durch die ein Stecker (30) zum elektrischen Kontakt mit dem Steckerelement einsteckbar ist,
das Halteelement (34) in einem Steuersatz eines Lenkkopflagers integriert ist,
das Fixieren des Steuersatzes ein klemmendes Fixieren des Steckerelements (26) bewirkt, und
das Halteelement (34) eine Durchgangsöffnung (36, 38) aufweist, **dadurch gekennzeichnet, dass**
in der Durchgangsöffnung ein elastisch verformbares Klemmelement angeordnet ist, das mit dem Steckerelement (26) zusammenwirkt und/oder Teil des Steckerelementes ist.

2. Fahrradelement nach Anspruch 1, **dadurch gekennzeichnet, dass** das Halteelement (34) das Steckerelement (26) klemmend fixiert.

3. Fahrradelement nach Anspruch 1 oder 2, **dadurch gekennzeichnet, dass** das Kabel (22) zumindest in dem Fahrradrahmenelement insbesondere einem Unterrohr (10) in einem Kabelkanal (24) angeordnet ist.

4. Fahrradelement nach Anspruch 3, **dadurch gekennzeichnet, dass** sich der Kabelkanal (24) ausgehend vom Batterieanschluss (18) zumindest bis zum Gabelrohr (14) erstreckt.

5. Fahrradelement nach Ansprüche 1 bis 4, **dadurch gekennzeichnet, dass** Kabel (22) vom Batterieanschluss (18) durch ein Fahrradrahmelement, insbesondere das Unterrohr (10) und/oder das Gabelrohr (14) in das das Steckerelement (26) aufnehmende Halteelement (34) geführt ist.

6. Fahrradsystem, insbesondere Fahrrad, mit mehreren Fahrradelementen nach einem der Ansprüche 1 bis 5, wobei es sich bei den Batterieanschlüssen (18) der mehreren Fahrradelemente um denselben Batterieanschluss (18) handelt.

7. Fahrradsystem, insbesondere Fahrrad, mit einem einzigen Fahrradelement (10, 12, 14) nach einem der Ansprüche 1 bis 5.

## Claims

1. A bicycle element comprising
a bicycle frame element (10, 12, 14),
a bicycle component (34) connected to the bicycle frame element (10, 12, 14),
a battery terminal (18) preferably provided at the bicycle frame element (10, 12, 14),
a cable (22) connected to the battery terminal (18), wherein the cable (22) is arranged in the bicycle frame element (10, 12, 14) and in the bicycle component (34), and
a holding element (34) connected to the bicycle component and/or designed as a bicycle component, which holding element fixes a connector element (26) connected to the cable (22).
wherein
the holding element (34) and/or the connector element (26) comprise an insertion opening (28) through which the connector (30) can be inserted for electric contact with the connector element,
the holding element (34) is integrated in a headset of a steering bearing,
the fixing of the headset causes a clamping fixation of the connector element (26), and
the holding element (34) has a through opening (36, 38),
**characterized in that**
an elastically deformable clamping element is arranged in the through opening, which interacts with the connector element (26) and/or is part of the connector element.

2. The bicycle element according to claim 1, **characterized in that** the holding element (34) fixes the connector element (26) in a clamping manner.

3. The bicycle element according to claim 1 or 2, **characterized in that** at least in the bicycle frame element, in particular in a down tube (10), the cable (22) is arranged in a cable duct (24).

4. The bicycle element according to claim 3, **characterized in that** the cable duct (24) extends at least to the steer tube (14), starting from the battery terminal (18).

5. The bicycle element according to claims 1 to 4, **characterized in that** the cable (22) is routed from the battery terminal (18) through a bicycle frame element, in particular the down tube (10) and/or the steer tube (14), into the holding element (34) receiving the connector element (26).

6. A bicycle system, in particular a bicycle, comprising a plurality of bicycle elements according to any one of claims 1 to 5, wherein the battery terminals (18) of the plurality of bicycle elements are one and the same battery terminal (18).

7. A bicycle system, in particular a bicycle, comprising a single bicycle element (10, 12, 14) according to any one of claims 1 to 5.

## Revendications

1. Élément de bicyclette avec
un élément de cadre de bicyclette (10, 12, 14),
un composant de bicyclette (34) relié à l'élément de cadre de bicyclette (10, 12, 14),
un raccord de batterie (18) prévu de préférence sur l'élément de cadre de bicyclette (10, 12, 14),
un câble (22) relié au raccord de batterie (18), dans lequel le câble (22) est disposé dans l'élément de cadre de bicyclette (10, 12, 14) et dans le composant de bicyclette (34), et
un élément de maintien (34) relié au composant de bicyclette et/ou réalisé en tant que composant de bicyclette, qui fixe un élément connecteur (26) relié au câble (22),
dans lequel l'élément de maintien (34) et/ou l'élément connecteur (26) présente une ouverture d'enfichage (28), à travers laquelle une fiche (30) peut être enfichée pour le contact électrique avec l'élément connecteur,
l'élément de maintien (34) est intégré dans un jeu de commande d'un palier de tête de direction,
la fixation du jeu de commande entraîne une fixation par serrage de l'élément connecteur (26), et
l'élément de maintien (34) présente une ouverture de passage (36, 38), **caractérisé en ce que**
un élément de serrage élastiquement déformable est disposé dans l'ouverture de passage, lequel coopère avec l'élément connecteur (26) et/ou fait partie de l'élément connecteur.

2. Élément de bicyclette selon la revendication 1, **caractérisé en ce que** l'élément de maintien (34) fixe par serrage l'élément connecteur (26).

3. Élément de bicyclette selon la revendication 1 ou 2, **caractérisé en ce que** le câble (22) est disposé au moins dans l'élément de cadre de bicyclette, en particulier un tube inférieur (10) dans une goulotte de câble (24).

4. Élément de bicyclette selon la revendication 3, **caractérisé en ce que** la goulotte de câble (24) s'étend en partant du raccord de batterie (18) au moins jusqu'au tube de fourche (14).

5. Élément de bicyclette selon les revendications 1 à 4, **caractérisé en ce que** le câble (22) est guidé depuis le raccord de batterie (18) à travers un élément de cadre de bicyclette, en particulier le tube inférieur (10) et/ou le tube de fourche (14) dans l'élément de maintien (34) recevant l'élément connecteur (26).

6. Système de bicyclette, en particulier bicyclette, avec plusieurs éléments de bicyclette selon l'une quelconque des revendications 1 à 5, dans lequel les raccords de batterie (18) des plusieurs éléments de bicyclette sont le même raccord de batterie (18).

7. Système de bicyclette, en particulier bicyclette, avec un seul élément de bicyclette (10, 12, 14) selon l'une quelconque des revendications 1 à 5.
